# EUROPÄISCHE PATENTSCHRIFT

(11) **EP 0 728 513 B1**
(45) Veröffentlichungstag und Bekanntmachung des Hinweises auf die Patenterteilung: **20.01.1999**
(21) Anmeldenummer: 95115681.9
(22) Anmeldetag: 05.10.1995
(51) Int. Cl.: B01D 46/42

(54) **Anzeigevorrichtung zur Anzeige des Unterdrucks**
Apparatus for indicating the subatmospheric pressure
Indicateur pour indiquer la dépression

(30) Priorität: 24.02.1995 DE 19506453
(43) Veröffentlichungstag der Anmeldung: 28.08.1996
(73) Patentinhaber: FILTERWERK MANN & HUMMEL GMBH, 71631 Ludwigsburg (DE)
(72) Erfinder: Kochert, Stefan, D-71384 Weinstadt (DE); Mössinger, Klaus, D-71482 Obersulm (DE)
(74) Vertreter: Voth, Gerhard, Dipl.-Ing.

(56) Entgegenhaltungen:
- EP-A- 0 229 893
- DE-A- 2 847 278
- US-A- 4 369 728
- US-A- 5 132 500

## Beschreibung

Die Erfindung betrifft eine Anzeigevorrichtung zur Anzeige des Unterdrucks nach dem Oberbegriff des Hauptanspruchs.

Eine solche Anzeigevorrichtung ist beispielsweise aus der US-A-43 69 728 bekannt. Diese dient zur Anzeige des Verschmutzungsgrades eines Luftfilters an einer Brennkraftmaschine. Solche Anzeigevorrichtungen arbeiten normalerweise mit dem Unterdruck, der auf der Reinluftseite des Luftfilters herrscht. Dieser Unterdruck bewirkt ein Verstellen einer Membran. Bei der Erhöhung des Verschmutzungsgrades des Luftfilters steigt selbstverständlich der Unterdruck an. Dieses wird von der Anzeigevorrichtung sensiert und in eine Anzeigeposition umgesetzt.

Ein Nachteil des bekannten Systems ist darin zu sehen, daß aufgrund der Gestaltung der Membran und des Kolbens eine geringe Genauigkeit erzielt wird. Außerdem besteht die Gefahr, daß das Rastelement den Kolben verkantet und damit ein Verklemmen des Kolbens bewirkt.

Es ist weiterhin aus der DE-A- 28 47 278 eine Anzeigevorrichtung bekannt, die mit einem elektrischen Kontaktelement arbeitet. Ein Koben bzw. eine Membran übt entgegen des Drucks einer Feder eine Kraft auf einen elektrischen Schalter aus. Sobald die Kraft eine bestimmte Größe überschreitet, öffnet oder schließt dieser elektrische Schalter und erzeugt ein Signal. Ein Nachteil dieser Einrichtung liegt darin, daß die Anzeige sehr stark von der Federkennlinie und der Elastizität des Kolbens bzw. des elektrischen Kontakts abhängig ist.

Aus der US-A-5 132 500 ist eine Differnzialdruckmeßeinrichtung bekannt, bei welcher ein Schnappschalter je nach Differenzialdruck in zwei Endlagen bewegt wird. Ein Nachteil bei dem dargestellten System besteht darin, daß der technische Aufbau zu Störungen neigt und die Übertragungsqualität aufgrund der konstruktiven Gestaltung keine hohe Zuverlässigkeit aufweist.

Der Erfindung liegt die Aufgabe zugrunde, eine Anzeigevorrichtung zu schaffen, die eine sehr hohe Genauigkeit aufweist und zuverlässig arbeitet. Diese Aufgabe wird ausgehend von dem Oberbegriff des Hauptanspruchs durch dessen kennzeichnenden Merkmale gelöst.

Der wesentliche Vorteil der Erfindung ist die Verwendung eines Schnappelements. Dieses Schnappelement hat einen genau definierten Schnapp-Punkt, der durch die Geometrie des Elements festgelegt ist. Beim Ansteigen des Unterdrucks wird der Kolben zunächst auf das Schnappelement eine Kraft ausüben ohne das Schnappelement zu betätigen. Erst ab einer bestimmten Kraft kippt das Schnappelement in die Schaltposition und erzeugt damit ein definiertes Signal.

Gemäß der Erfindung ist das Schnappelement gleichzeitig die Feder, welche den Kolben bei fehlendem Unterdruck wieder in die Ausgangslage zurückführt. Das Schnappelement ist in vorteilhafter Weise ein rechteckförmiges Metallblättchen, welches einen ebenen umlaufenden Rand aufweist und zur Mitte hin mit einer trapezförmigen Durchbiegung versehen ist. Der Vorteil dieses rechteckförmigen Elements liegt in der präzisen Herstellbarkeit. Außerdem besteht bei einem solchen Element die Möglichkeit, dieses über den Schnapp-Punkt hinausgehend durchzubiegen, wobei die weitere Durchbiegung im wesentlichen entsprechend einer Federkennlinie verläuft.

Gemäß einer Ausgestaltung der Erfindung ist der elektrische Kontakt zur Abgabe eines Signals ein Reedschalter. Dieser wird über ein magnetisches Schnappelement oder ein oder ein am Schnappelement angeordneten Magneten geschaltet. Alternativ hierzu ist der elektrische Kontakt ein Berührungsschalter, der in der Ruhelage des Schnappelements von diesem entkoppelt ist und erst nach dem Arbeitshub des Elements bzw. erst innerhalb der Phase in der das Schnappelement eine lineare Federkennlinie aufweist, ein Signal abgibt.

Ausführungsbeispiele der Erfindung sind in den Zeichnungen dargestellt und werden im folgenden näher erläutert. Die Zeichnungen zeigen:
- Figur 1: die Schnittdarstellung einer Anzeigevorrichtung,
- Figur 2: eine Draufsicht auf die in Figur 1 gezeigte Anzeigevorrichtung,
- Figur 3: ein Kraftwegdiagramm eines Schnappelements.

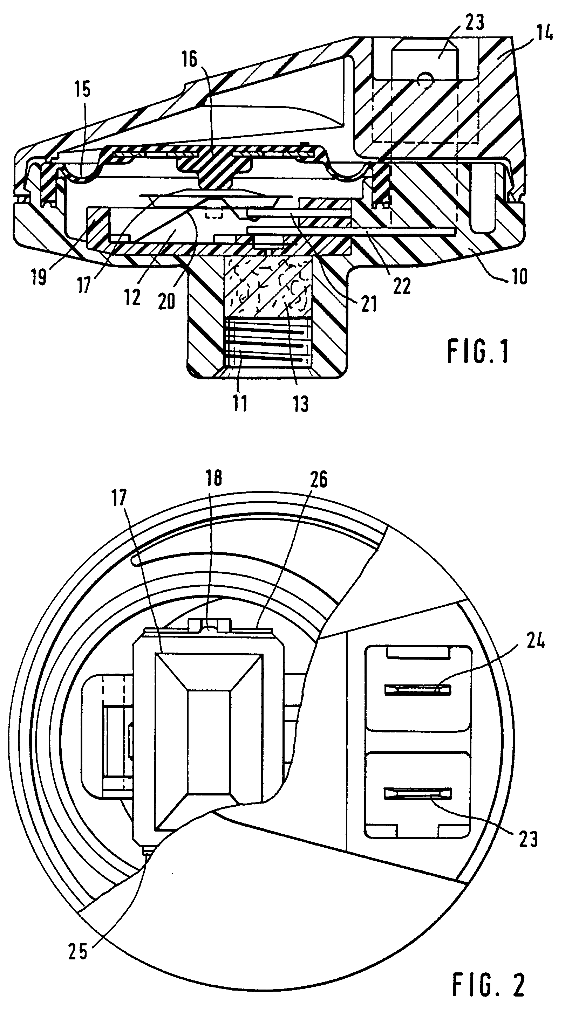

In Figur 1 ist eine Anzeigevorrichtung bzw. ein Wartungsschalter für ein Filterelement gezeigt. Diese besteht aus einem Gehäuse 10, an welchem ein Anschluß 11 für eine Unterdruckquelle vorgesehen ist. Der Anschluß 11 weist eine Verbindung zu dem Gehäuseinneren 12 auf. Zur Verhinderung von Schmutzeintritt in das Gehäuseinnere 12 ist ein Filterelement 13 vorgesehen. Das Gehäuse ist mit einem Deckel 14 abgeschlossen. Zwischen Gehäuse und Deckel ist eine Membran 15 befestigt. Diese Membran übernimmt gleichzeitig die Abdichtung zwischen dem Deckel 14 und dem Gehäuse 10. Wie in der Figur dargestellt, sind diese beiden Teile an ihrem Umfang miteinander verschnappt. An der Membran 15 ist ein axial beweglicher Kolben 16 angeordnet. Oberhalb des Kolbens 16 herrscht Umgebungsdruck, unterhalb des Kolbens 16 herrscht im Gehäuseinneren der über den Anschluß 11 anliegende Unterdruck. Im Gehäuseinneren 12 befindet sich weiterhin ein Schnappelement 17.

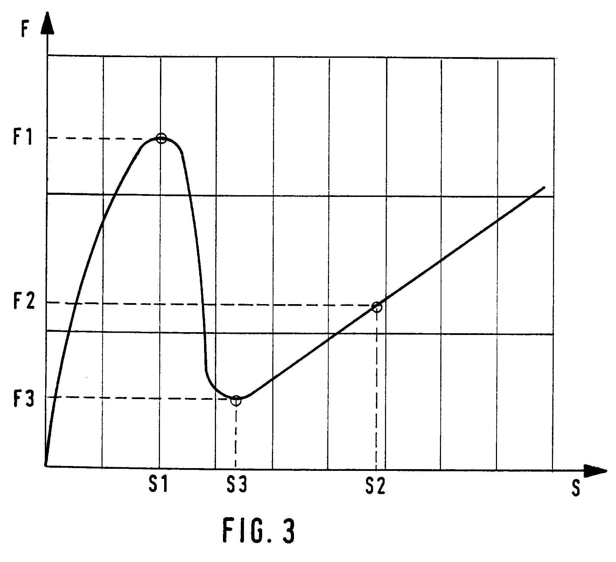

Dieses ist in der Draufsichtdarstellung gemäß Figur 2 ebenfalls zu erkennen. Das Schnappelement ist rechteckförmig ausgestaltet und an den Schmalseiten über Nasen 18 an einem Stützkörper 19 fixiert. Unterhalb des Schnappelements ist eine elektrische Kontaktfeder 20 angeordnet. Diese liegt in der hier gezeigten Ruhestellung an der Auflage 21 an. In der aktivierten Stellung liegt diese Kontaktfeder an der Kontaktplatte 22. Die Kontaktplatte 22 ist mit dem Anschlußstift 23 elektrisch leitend verbunden. Der Anschlußstift 24 steht mit der elektrischen Kontaktfeder 20 in Verbindung. Das Schnappelement ist, wie in Figur 2 gezeigt, derart geprägt, daß sich in der Mitte eine im wesentlichen rechteckförmige Druckfläche ausbildet. Mittig zu der Druckfläche ist der Kolben 16, wie in Figur 1 gezeigt, angeordnet. Da das Schnappelement lediglich im äußeren Bereich 26, 25 aufliegt, kann neben dem Durchschnappen auch eine Durchbiegung dieses Elements erfolgen.

Die Abhängigkeit zwischen Unterdruckkraft und Weg ist in Figur 3 dargestellt. Auf der Ordinate ist der Weg S, welcher das Schnappelement zurücklegt, auf der Abszisse die Kraft F, die auf das Schnappelement einwirkt, dargestellt. Zu Beginn ist eine sehr hohe Kraft erforderlich, die bei dem Maximalpunkt F1 dazu führt, daß das Schnappelement durchschnappt. In der Stellung S3 ist der Durchschnapp-Punkt erreicht und bei einer Krafterhöhung verhält sich die Durchbiegung linear zu der zugeführten Kraft. In diesem Linearbereich liegt der Schaltzeitpunkt S2. Dieser Schaltpunkt liegt beispielsweise bei 15 mbar Unterdruck. Die hohe Genauigkeit der Anzeigevorrichtung wird dadurch erzielt, daß der Linearbereich, der sich nach dem Schnappen einstellt, sehr genau festgelegt werden kann. Die Schnappkraft F1 kann durch die Höhe der Durchprägung des Schnappelements definiert werden.

Je nach Spezifikation kann so ein Wartungsschalter geschaffen werden, der optimal an den zulässigen maximalen Unterdruck angepasst werden kann.

## Patentansprüche

1. Anzeigevorrichtung zur Anzeige des Unterdrucks auf der Reinluftseite eines Luftfilters für eine Brennkraftmaschine, bestehend aus einem Gehäuse (10), einem in dem Gehäuse (10) angeordneten beweglich gelagerten Kolben (16), einer auf den Kolben(16) kraftausübende Feder, sowie eine den Unterdruckbereich gegenüber dem Umgebungsdruckbereich abschließende Membran(15), dadurch gekennzeichnet, daß ein Schnappelement (17) vorgesehen ist, welches mit einem elektrischen Kontakt versehen ist, wobei der Kolben (16) auf das Schnappelement (17) wirkt, und daß das Schnappelement (17) die auf den Kolben kraftausübende Feder ist und das Schnappelement (17) einen durch die Geometrie des Elements festgelegten, definierten Schnapp-Punkt aufweist.

2. Anzeigevorrichtung nach einem der vorherigen Ansprüche, dadurch gekennzeichnet, daß das Schnappelement (17) eine im wesentlichen rechteckförmige Schnappscheibe ist, welche einen umlaufenden Rand und eine trapezförmige Durchbiegung aufweist.

3. Anzeigevorrichtung nach einem der vorherigen Ansprüche, dadurch gekennzeichnet, daß der elektrische Kontakt ein Reedschalter ist.

4. Anzeigevorrichtung nach einem der Ansprüche 1 oder 2, dadurch gekennzeichnet, daß der elektrische Kontakt in der Ruhestellung der Schnappscheibe einen Abstand zu dieser aufweist und im durchgeschnappten Zustand der Schnappscheibe diese kontaktiert, wobei eine elektrische Verbindung in einer weiteren Durchbiegephase hergestellt wird.

## Claims

1. Indicator device for indicating the reduced pressure on the filtered air side of an air filter for an internal combustion engine, comprising a housing (10), a displaceably mounted piston (16) disposed in the housing (10), a spring which exerts force on the piston (16), and a diaphragm (15) which seals the reduced pressure region from the ambient pressure region, characterized in that a snap element (17) is provided, which is provided with an electrical contact, the piston (16) acting on the snap element (17), and in that the snap element (17) is the spring exerting force on the piston, and the snap element (17) has a specific snap point determined by the geometry of the element.

2. Indicator according to one of the preceding claims, characterised in that the snap element (17) is a substantially rectangular snap disc, which has a circumferential edge and a trapezoidal deflection.

3. Indicator according to one of the preceding claims, characterised in that the electrical contact is a Reed switch.

4. Indicator according to one of claims 1 or 2, characterised in that, when the snap disc is in its inoperative position, the electrical contact has a spacing from said disc and contacts said disc when the snap disc is in its snapped-through state, an electrical connection being established in an additional deflection phase.

## Revendications

1. Indicateur de dépression prévu sur le côté de l'air filtré d'un filtre à air d'un moteur à combustion interne, comprenant un boîtier (10), un piston (16) monté mobile dans le boîtier (10), un ressort appliqué contre le piston (16) ainsi qu'une membrane (15) séparant la zone à dépression vis-à-vis de la zone à la pression ambiante,
caractérisé par
• un élément d'encliquetage (17) muni d'un contact électrique,
• le piston (16) agissant sur l'élément d'encliquetage (17)
• l'élément d'encliquetage (17) et le ressort exerçant une force sur le piston et l'élément d'encliquetage (17) présente un point d'encliquetage défini par la géométrie de cet élément.

2. Indicateur selon la revendication précédente,
caractérisé en ce que
l'élément d'encliquetage (17) est un disque d'encliquetage de forme essentiellement rectangulaire, avec un bord périphérique et une flexion trapézoïdale.

3. Indicateur selon l'une des revendications précédentes,
caractérisé en ce que
le contact électrique est un contacteur à lamelles.

4. Indicateur selon l'une quelconque des revendications précédentes,
caractérisé en ce que
le contact électrique, en position de repos du disque d'encliquetage, est à une distance de celui-ci et à l'état encliqueté le disque d'encliquetage est en contact, une liaison électrique étant établie dans la phase de flexion plus poussée.
